# EUROPÄISCHE PATENTSCHRIFT

(11) **EP 1 636 474 B1**
(45) Veröffentlichungstag und Bekanntmachung des Hinweises auf die Patenterteilung: **01.08.2012**
(21) Anmeldenummer: 04738515.8
(22) Anmeldetag: 18.05.2004
(51) Int. Cl.: F02F 3/22

(54) **VERFAHREN ZUR HERSTELLUNG EINES EINTEILIGEN KOLBENS FÜR EINEN VERBRENNUNGSMOTOR**
METHOD FOR PRODUCING A ONE-PIECE PISTON FOR AN INTERNAL COMBUSTION ENGINE
PROCEDE DE PRODUCTION D'UN PISTON MONOBLOC POUR UN MOTEUR A COMBUSTION

(30) Priorität: 21.05.2003 DE 10322921
(43) Veröffentlichungstag der Anmeldung: 22.03.2006
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2004/001042
(87) Internationale Veröffentlichungsnummer: WO 2004/103634

(56) Entgegenhaltungen:
- WO-A-80/02308
- DE-A- 10 132 446
- GB-A- 234 189
- US-A1- 2002 133 946

## Beschreibung

Die Erfindung betrifft ein Verfahren zur Herstellung eines einteiligen Kolbens für einen Verbrennungsmotor nach dem Oberbegriff des Anspruches 1.

Ein Kolben gemäß dem Oberbegriff des Anspruches 1 ist aus der Europäischen Patentschrift EP 0 027 445 B1 bekannt. Vorgeschlagen wird darin, den Kolben im Gleßverfahren herzustellen. Um die vorhandene Ölmenge besser zur Kühlung des Kolbens ausnutzen zu können, weist der bekannte Kolben in seinem Randbereich einen von einem ölrinnenartig ausgebildeten Vorsprung teilweise verschlossenen Kühlkanal auf. Hierbei ist der Vorsprung teilweise an der Nabenabstützung und teilweise an der Schaftanbindung angeformt, was mit sich bringt, dass die gießtechnische Herstellung des bekannten Kolbens sehr komplizierte und aus mehreren Teilen bestehende Gießwerkzeuge erfordert. Das hat den Nachteil, dass die Herstellung des aus dem genannten Stand der Technik bekannten Kolbens sehr aufwendig und kostspielig ist. Zudem bringt die gießtechnische Herstellung von Kolben Immer auch die Gefahr mit sich, dass sich hierbei im Kolben Lunker, d.h., Lufteinschlüsse bilden, die den Kolben völlig unbrauchbar machen.

Aus der US-Patentanmeldung, US 2002/0133946A1, ist ein Verfahren zur Herstellung eines einstückigen Kolbens bekannt, bei dem zunächst ein Kolbenrohling geschmiedet und anschließend eine ringförmige Aussparung in die radiale Außenfläche des Kolbenrohlings zwischen der Kolbenringpartie und dem Kolbenmantel eingearbeitet wird. Anschließend wird auf der Höhe der Kolbenringpartie in den Kolbenboden ein nach unten offener Kühlkanal eingeformt. Nachteilig da aufwendig und kostspielig ist hierbei, dass der Kühlkanal von einem Abdeckring verschlossen werden muss, um einen geschlossenen Kühlkanal zu erhalten.

Aus der Deutschen offenlegungsschrift, DE 101 32 446 A1, ist ein Kolben bekannt, der aus einem geschmiedeten Oberteil und einem geschmiedeten Unterteil besteht, wobei das Oberteil einen nach unten offenen Kühlkanal aufweist. Mit Aufwand und Kosten ist verbunden, dass zum Erhalt eines geschlossenen Kühlkanals dieser mit einer ringförmigen Abdeckung verschlossen werden muss, und dass erst danach das Oberteil und das Unterteil miteinander verschweißt werden können.

Hiervon ausgehend liegt der Erfindung die Aufgabe zugrunde, die genannten Nachteile des Standes der Technik zu vermeiden.

Gelöst wird diese Aufgabe mit den im Kennzeichen des Hauptanspruches stehenden Merkmalen. Zweckmäßige Ausgestaltungen der Erfindung sind Gegenstand der Unteransprüche.

Insbesondere auch das in den Unteransprüchen erwähnte Ringelement zu Verkleinerung des Spaltes zwischen der Ringwand und dem Vorsprung ergibt eine einfache und preisgünstige Möglichkeit, die Ausnutzung der vorhandenen Ölmenge zur Kühlung des Kolbens weiter zu verbessern.

Ein Ausführungsbeispiel der Erfindung wird im Folgenden anhand der Zeichnungen beschrieben. Es zeigen
- Fig. 1: einen Kolben für einen Verbrennungsmotor mit einem Kühlkanal, der gemäß der Erfindung von einem rinnenförmigen Vorsprung teilweise verschlossen ist, dargestellt in einem aus zwei Hälften bestehenden Schnittbild, das zwei um 90° versetzte Längsschnitte des Kolbens zeigt,
- Fig. 2: einen Schnitt des Kolbens entlang der Linie A-A in Fig. 1,
- Fig. 3: einen geschmiedeten Kolbenrohling,
- Fig. 4: das Resultat erster Arbeitsschritte zur Herstellung des Kolbens,
- Fig. 5 und 6: Verfahrensschritte zur Herstellung des Kühlkanals und eines als Ölrinne ausgebildeten Vorsprunges und
- Fig. 7: eine Ausgestaltung des erfindungsgemäßen Kolbens mit einem an der Stirnseite der Ringwand angebrachten Ringelement.

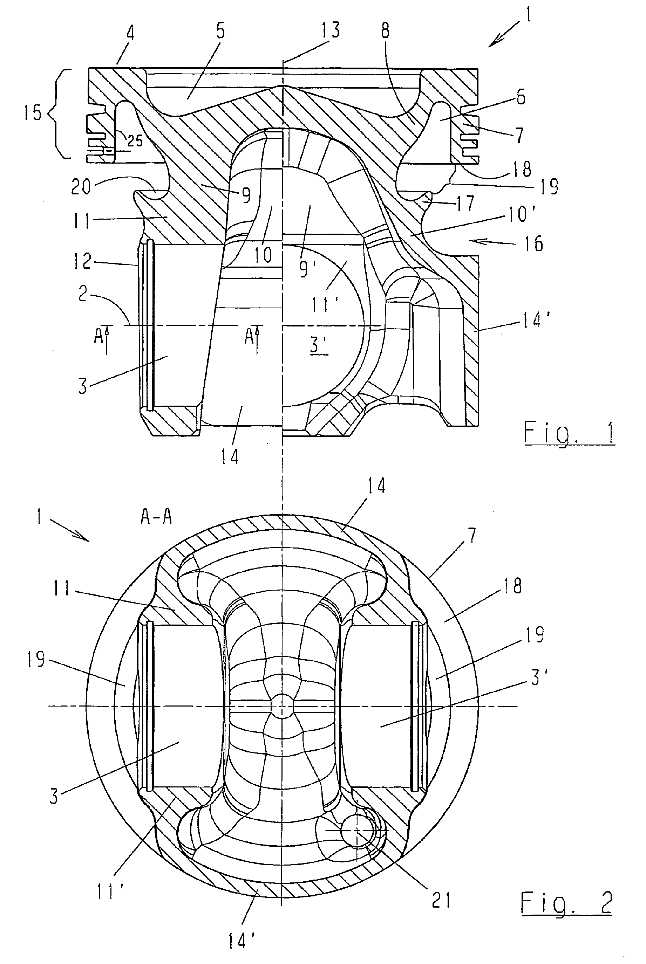

Figur 1 zeigt einen einteilig ausgebildeten Kolben 1 für einen Verbrennungsmotor in einem Schnittbild, das aus zwei Hälften besteht, von denen die linke Hälfte einen Schnitt des Kolbens 1 entlang einer Längsachse 2 einer Nabenbohrung 3 und die rechte Hälfte einen um 90° dazu versetzten Längsschnitt des Kolbens 1 darstellt. Der Kolben 1 ist aus Stahl hergestellt und weist im Bereich des Kolbenbodens 4 eine Brennraummulde 5 auf. Im radial außen liegenden Bereich des Kolbenbodens 4 ist ein ringförmig umlaufender Kühlkanal 6 angeordnet, dessen radial äußere Begrenzung 25 von einer an den Kolbenboden 4 angeformten Ringwand 7 und dessen radial innere Begrenzung teils von einer Ringrippe 8, teils von einer Nabenabstützung 9, 9' und teils von einer Schaftanbindung 10, 10' gebildet werden. Die Ringwand 7 dient hierbei als Kolbenringträger.

Über die Nabenabstützungen 9, 9' sind an den Kolbenboden 4 je eine Bolzennabe 11, 11' mit jeweils einer Nabenbohrung 3, 3' angeformt. Die Stirnflächen 12 der Bolzennaben 11, 11' sind gegenüber der Ringwand 7 in Richtung der Kolbenlängsachse 13 zurückgesetzt angeordnet. Die Bolzennaben 11, 11' sind über Schaftelemente 14, 14' miteinander verbunden, die über je eine Schaftanbindung 10, 10' an den Kolbenboden 4 angeformt sind. Zwischen den Schaftelementen 14, 14' und dem kolbenbodenseitigen Bereich 15 des Kolbens 1 weist dieser Ausnehmungen 16 auf.

Der Kühlkanal 6 wird in Richtung der Bolzennaben 11, 11' von einem als Ölrinne ausgebildeten, umlaufenden Vorsprung 17 teilweise verschlossen, der teils an der Nabenabstützung 9, 9' und teils an der Schaftanbindung 10, 10' angeformt ist. Der Vorsprung 17 bildet mit der bolzennabenseitigen Stirnfläche 18 der Ringwand 7 einen Spalt 19.

Der in Fig. 2 gezeigte Schnitt entlang der Linie A-A in Fig. 1 zeigt die Schaftelemente 14, 14', die Bolzennaben 11, 11', die Nabenbohrungen 3, 3', die Stirnfläche 18 des Ringbandes 7, den Spalt 19 und eine in den Kühlkanal 6 mündende Öffnung 21 zum Zuführen von Kühlöl, die in Fig. 1 wegen der Lage der Schnitte nicht eingezeichnet ist. Durch diese Öffnung 21 wird von der dem Kolbenboden 4 abgewandten Seite Öl in der Kühlkanal 6 gespritzt, das auf der Unterseite des Kolbenbodens 4 auftrifft, den Kolbenboden 4 kühlt und anschließend zum Teil über den Spalt 19 aus dem Kühlkanal 6 austritt und zum Teil von dem rinnenförmigen Vorsprung 17 aufgefangen wird. Das von der Hinterschneidung 20 des Vorsprunges 17 aufgefangene Öl kann bei den nächsten Hin-und Herbewegungen des Kolbens 1 mehrfach zur Kühlung der Ringwand 7 und des Kolbenbodens 4 genutzt werden.

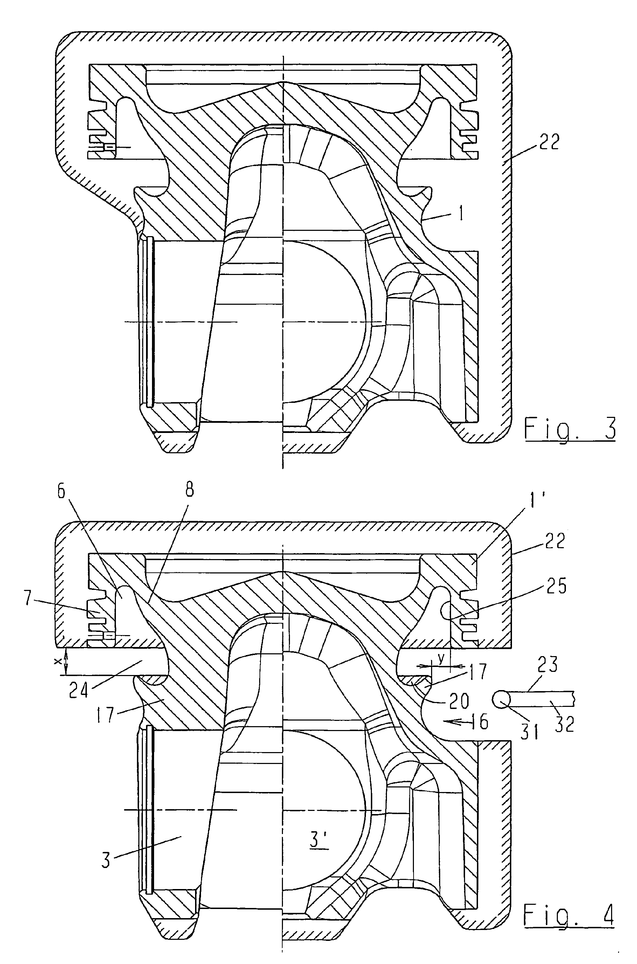

Fig. 3 zeigt einen Kolbenrohling 22 aus Stahl, der im Schmiedeverfahren hergestellt ist, und in den der hieraus durch Drehen herzustellende, fertige Kolben 1 eingezeichnet ist.

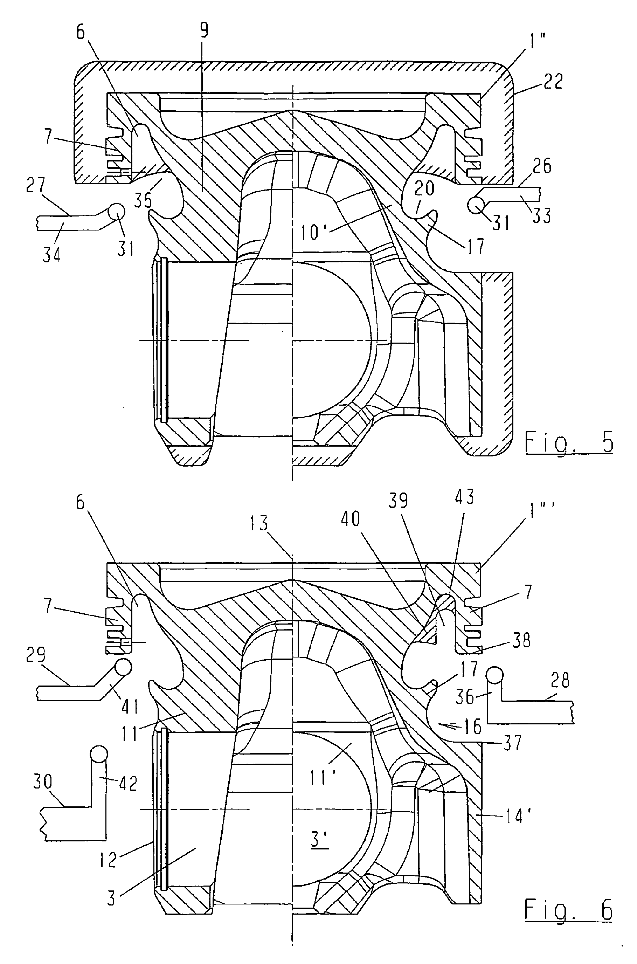

In ersten Verfahrensschritten werden gemäß Figur 4 mit Hilfe eines Drehwerkzeuges 23, das aus einer runden Schneidplatte 31 mit einem Werkzeughalter 32 besteht, die Ausnehmung 16 und ein ringförmiger Spalt 24 aus dem Kolbenrohling 22 ausgedreht, wobei auch der Vorsprung 17 ohne Hinterschneidung 20 hergestellt wird. Bei diesen ersten Verfahrensschritten ist darauf zu achten, dass die axiale Breite x des Spaltes 24 zwischen dem Vorsprung 17 und der Unterseite der Ringwand 7 groß genug ist, damit die in den Figuren 5 und 6 dargestellten Drehwerkzeuge 26 bis 30 zur Herstellung des Kühlkanals 6 und der Hinterschneidung 20 verwendet werden können. Weiterhin ist darauf zu achten, dass der radiale Abstand y zwischen dem radial äußeren Rand des Vorsprunges 17 und der radial äußeren Begrenzung 25 des vorgesehenen Kühkanals 6 so klein wie möglich aber dennoch groß genug ist, damit insbesondere die in Fig. 6 dargestellten abgewinkelten Werkzeuge 28 und 30 zur Herstellung des Kühlkanal 6 von unten zwischen die Ringwand 7 und den Vorsprung 17 einführbar sind.

Fig. 5 zeigt zwei Verfahrensschritte zur Herstellung des Kolbens 1". In der rechten Hälfte des Schnittbildes ist ein Drehwerkzeug 26 dargestellt, bei dem die Schneidplatte 31 von einem im vorderen Bereich um ca. 45° nach unten abgewinkelten Werkzeughalter 33 gehalten wird. Hiermit wird die Hinterschneidung 20 in den Vorsprung 17 eingedreht.

Ein erster in der linken Hälfte des Schnittbildes dargestellter Schritt zur Herstellung des Kühlkanals 6 erfolgt unter Verwendung des Drehwerkzeuges 27, bei dem die Schneidplatte 31 an einem im vorderen Bereich um ca. 30° nach oben abgewinkelten Werkzeughalter 34 befestigt ist. Hiermit ist eine Ausnehmung 35 in den Bereich zwischen Ringwand 7 und Nabenabstützung 9, 9', bzw. Schaftanbindung 10, 10' eindrehbar.

Fig. 6 zeigt die letzten Schritte zur Herstellung des Kühlkanals 6. Hierbei wird zunächst mit dem Drehwerkzeug 28 mit einem im vorderen Bereich rechtwinklig nach oben abgewinkelten Arm 36, der kürzer ist als der Abstand zwischen der Oberkante 37 des Schaftelementes 14, 14' und der Unterkante 38 der Rinwand 7, eine Ausnehmung 39 erzeugt. Hierbei erlaubt die beschränkte Länge des Armes 36, dass das Drehwerkzeug 28 an beliebiger Stelle der Kolbenseite, d.h., auch im Bereich zwischen Ringrippe 7 und Schaftelement 14, 14' ansetzbar ist, um mit dem ersten Schritt zur Herstellung des Kühlkanals 6 zu beginnen.

Hierbei verbleibt ein Restbereich 40, der mit dem Drehwerkzeug 29 entfernbar ist, das in seinem vorderen Bereich einen um ca. 45° nach oben abgewinkelten Arm 41 aufweist. Die Fertigstellung des Kühlkanals erfolgt unter Verwendung des Drehwerkzeuges 30, dessen rechtwinklig abgewinkelter Arm 42 lange genug ist, um den Restbereich 43 auszudrehen. In Abhängigkgeit von der gewünschten Höhe des Kühlkanals 6 kann der Arm 42 länger als der Abstand zwischen der Oberkante 37 des Schaftelementes 14, 14' und der Unterkante 38 der Ringwand 7 sein. In diesem Fall ist es erforderlich, das Drehwerkzeug 30 im Bereich der Stirnfläche 12 der Bolzennaben 11, 11', die gegenüber der Ringwand 7 zurückgesetzt angeordnet ist, in die Ausnehmung 39 einzuführen, um den Drehvorgang zu starten. Eine ausreichend große Ausnehmung 16 erlaubt es dann, dass der Drehvorgang mit in die Ausnehmung 39 eingefahrenem Arm 42 und in Rotation versetztem Kolben 1'" unbehindert von den Schaftelementen 14, 14' abläuft.

Im Anschluss daran werden die Außenkonturen des Kolbens 1'" in an sich bekannter Weise mit dazu geeigneten, in Fig. 6 nicht dargestellten Drehwerkzeugen fertiggedreht und die Nabenbohrungen 3, 3' eingebracht. Es ergibt sich der in den Fig. 1 und 2 dargestellte Kolben.

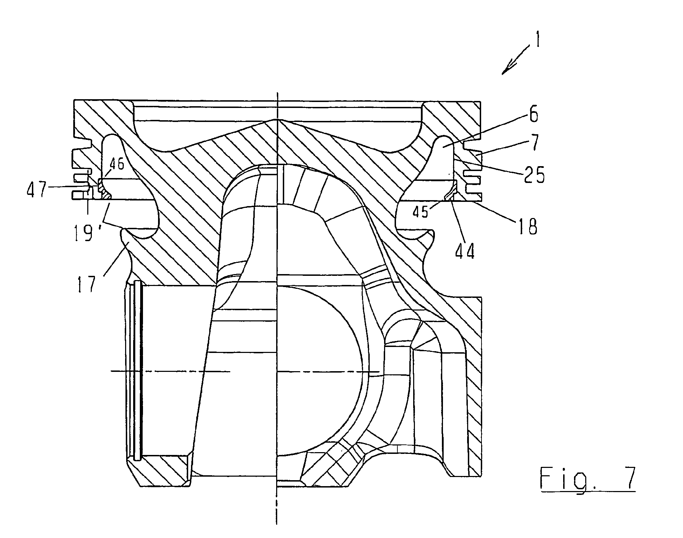

Um die vorhandene Ölmenge besser zur Kühlung des Kolbens 1 ausnutzen zu können, wird gemäß Fig. 7 die Menge des bei den Hin- und Herbewegungen des Kolbens 1 aus dem Spalt 19' austretenden Kühlöles dadurch verringert, dass der Spalt 19' gegenüber dem Spalt 19 verkleinert wird. Zu diesem Zweck ist an der Innenseite der bolzennabenseitigen Stirnfläche 18 der Ringwand 7 ein einstückig ausgebildetes und mit einem radialen Spalt versehenes Ringelement 44 angebracht, das aus Metall oder aus Kunststoff bestehen kann, und dessen Innenseite im Querschnitt die Form einer nach innen gerichteten Nase 45 hat. Zur Befestigung des Ringelementes 44 ist auf dessen Außenseite eine umlaufende Anformung 46 vorgesehen, die in eine entsprechend geformte, umlaufende Nut 47 passt, die im Bereich der Stirnfläche 18 in die Innenseite der Ringwand 7 eingebracht ist.

Die Montage des Ringelementes 44 erfolgt dadurch, dass es auseinandergebogen und zwischen Ringwand 7 und Vorsprung 17 um den Kolben 1 gelegt wird. Der Spalt des Ringelementes 44 erlaubt es anschließend, das Ringelement 44 zusammenzudrücken und dadurch dessen Radius so weit zu reduzieren, dass es von unten in den Kühlkanal 6 eingeführt werden kann, bis die Anformung 46 des Ringelementes 44 in die Nut 47 einrastet. Besteht das Ringelement 44 aus Metall, reicht dessen Eigenspannung aus, um das Ringelement 44 dauerhaft im Kühlkanal 6 zu fixieren. Besteht das Ringelement 44 aus Kunststoff, ist zu dessen Fixierung ein geeigneter Klebstoff erforderlich.

### Bezugszeichenliste

- 1, 1', 1": Kolben
- 2: Längsachse
- 3, 3': Nabenbohrung
- 4: Kolbenboden
- 5: Brennraummulde
- 6: Kühlkanal
- 7: Ringwand
- 8: Ringrippe
- 9, 9': Nabenabstützung
- 10, 10': Schaftanbindung
- 11, 11': Bolzennabe
- 12: Stirnfläche der Bolzennabe 11, 11'
- 13: Kolbenlängsachse
- 14, 14': Schaftelement
- 15: kolbenbodenseitiger Bereich des Kolbens 1
- 16: Ausnehmung
- 17: Vorsprung
- 18: Stirnfläche der Ringwand 7
- 19, 19': Spalt
- 20: Hinterschneidung des Vorsprunges 17
- 21: Öffnung
- 22: Kolbenrohling
- 23: Drehwerkzeug
- 24: Spalt
- 25: radial äußere Begrenzung des Kühlkanals 6, Innenseite der Ringwand 7
- 26-30: Drehwerkzeug
- 31: runde Schneidplatte
- 32-34: Werkzeughalter
- 35: Ausnehmung
- 36: Arm
- 37: Oberkante des Schaftelementes 14
- 38: Unterkante des Ringelementes 7
- 39: Ausnehmung
- 40: Restbereich
- 41,42: Arm
- 43: Restbereich
- 44: Ringelement
- 45: Nase
- 46: Anformung
- 47: Nut

## Patentansprüche

1. Verfahren zur Herstellung eines einteiligen Kolbens (1) für einen Verbrennungsmotor,
- mit einem Kolbenboden (4),
- mit zwei am Kolbenboden (4) angeformten Nabenabstützungen (9, 9') für je eine Bolzennabe (11, 11'), wobei die Nabenabstützungen (9, 9') und die Stirnflächen (12) der Bolzennaben (11, 11') gegenüber dem radial äußeren Rand des Kolbenbodens (4) in Richtung Kolbenlängsachse (13) zurückgesetzt angeordnet sind,
- mit zwei die Bolzennaben (11, 11') verbindenden Schaftelementen (14, 14'), die über je eine Schaftanbindung (10, 10') mit dem Kolbenboden (4) verbunden sind, wobei in die Schaftanbindungen (10, 10') zwischen den Schaftelementen (14, 14') und dem Kolbenboden (4) Ausnehmungen (16) eingeformt sind,
- mit einem im Randbereich des Kolbenbodens (4) angeordneten, ringförmigen Kühlkanal (6), dessen radial äußere Begrenzung von einer am Kolbenboden (4) angeformten Ringwand (7) und dessen radial innere Begrenzung teils von den Nabenabstützungen (9, 9') und teils von den Schaftanbindungen (10, 10') gebildet werden, und
- mit einem als Ölrinne ausgebildeten, umlaufenden und teils an die Nabenabstützungen (9, 9') und teils an die Schaftanbindungen (10, 10') angeformten Vorsprung (17), mit dem der Kühlkanal (6) zur Seite der Bolzennaben (11, 11') hin teilweise verschlossen ist, **dadurch gekennzeichnet, dass** ein Kolbenrohling (22) im Schmiedeverfahren hergestellt wird, und
- wobei durch spanabhebende Bearbeitung
= die Ausnehmung (16) und auf der den Bolzennaben (11, 11') zugewandten Seite der Ringwand (7) ein ringförmiger, zum Einführen von Bearbeitungswerkzeugen ausreichend breiter Spalt (24) eingebracht werden, wobei der Vorsprung (17) derart ausgeformt wird, dass dessen radial äußerer Rand von der radial äußeren Begrenzung (25) des vorgesehenen Kühlkanals (6) einen geringfügig größeren, radialen Abstand (y) hat, als zur Herstellung des Kühlkanals (6) verwendete Bearbeitungswerkzeuge (28, 29, 30) breit sind,
= in den Vorsprung (17) eine zum Kolbenboden (4) hin offene, rinnenförmige Hinterschneidung (20) eingebracht wird,
= der Kühlkanal (6) in den Randbereich des Kolbenbodens (4) eingebracht wird, und
= Nabenbohrungen (3, 3') eingebracht und die Außenkontur des Kolbens (1) fertigbearbeitet werden.

2. Verfahren zur Herstellung eines einteiligen Kolbens (1) für einen Verbrennungsmotor nach Anspruch 1, **dadurch gekennzeichnet, dass** als Kolbenmaterial ein schmiedbarer, warmfester Stahl verwendet wird.

3. Verfahren zur Herstellung eines einteiligen Kolbens (1) für einen Verbrennungsmotor nach Anspruch 1, **dadurch gekennzeichnet, dass** als Kolbenmaterial eine schmiedbare Aluminium-Legierung verwendet wird.

4. Verfahren zur Herstellung eines einteiligen Kolbens (1) für einen Verbrennungsmotor nach Anspruch 1 bis 3, **dadurch gekennzeichnet, dass** der Kolben (1) durch Drehen hergestellt wird.

5. Verfahren zur Herstellung eines einteiligen Kolbens (1) für einen Verbrennungsmotor nach einem der vorhergehenden Ansprüche, **dadurch gekennzeichnet, dass** zur Verkleinerung eines sich zwischen der Ringwand (7) und dem radial äußeren Rand des Vorsprunges (17) ergebenden Spaltes (19') im bolzennabenseitigen Bereich der Innenseite (25) der Ringwand (7) ein Ringelement (44) angebracht wird, dessen bolzennabenseitiger Rand in den Kühlkanal (6) hineinreicht.

6. Verfahren zur Herstellung eines einteiligen Kolbens (1) für einen Verbrennungsmotor nach Anspruch 5, **dadurch gekennzeichnet, dass** das Ringelement (44) im Querschnitt die Form einer nach innen gerichteten Nase aufweist.

7. Verfahren zur Herstellung eines einteiligen Kolbens (1) für einen Verbrennungsmotor nach Anspruch 5 oder 6, **dadurch gekennzeichnet, dass** als Material für das Ringelement (44) ein elastisch nachgiebiges Metall verwendet wird.

8. Verfahren zur Herstellung eines einteiligen Kolbens (1) für einen Verbrennungsmotor nach Anspruch 5 oder 6, **dadurch gekennzeichnet, dass** als Material für das Ringelement (44) Kunststoff verwendet wird, und dass das Ringelement (44) im Bereich der Stirnfläche (18) an die Innenseite der Ringwand (7) angeklebt wird.

9. Verfahren zur Herstellung eines einteiligen Kolbens (1) für einen Verbrennungsmotor nach einem der Ansprüche 5 bis 8, **dadurch gekennzeichnet, dass** das Ringelement (44) auf seiner Außenseite eine umlaufende Anformung (46) aufweist, die zur Befestigung des Ringelementes (44) in eine entsprechend geformte, im Bereich der Stirnfläche (18) in die Innenseite (25) der Ringwand (7) eingebrachte, umlaufende Nut (47) eingeführt wird.

## Claims

1. A method for producing a one-piece piston (1) for an internal combustion engine, comprising
- a piston crown (4)
- two pin boss supports (9, 9') molded on the piston crown (4) for in each case one pin boss (11, 11'), wherein in the direction of the longitudinal axis (13) of the piston, the pin boss supports (9, 9') and the faces (12) of the pin bosses (11, 11') are arranged set back relative to the radially outer edge of the piston crown (4),
- two skirt elements (14, 14') which connect the pin bosses (11, 11') and which are connected to the piston crown (4) via in each case one skirt connection (10, 19'), wherein recesses (16) are molded into the skirt connections (10, 10') between the skirt elements (14, 14') and the piston crown (4),
- a ring-shaped cooling channel (6) which is arranged in an edge region of the piston crown (4), and the radial outer border of which is formed by a ring wall (7) molded onto the piston crown (4), and the radial inner border of which is partly formed by the pin boss supports (9, 9') and partly by the skirt connections (10, 10), and
- a projection (17) which is configured as an oil chute and runs around the circumference and is partly molded onto the pin boss supports (9, 9') and partly onto the skirt connections (10, 10'), and by means of which the cooling channel (6) is partly closed toward the side of the pin bosses (11, 11'),
**characterized in that**
a piston blank (22) is produced using a forging method, and
- wherein by a machining process
= the recess (16) and, on the ring wall (7) side facing toward the pin bosses (11, 11'), a ring-shaped, sufficiently wide gap (24) for inserting machining tools are implemented, wherein said projection (17) is formed in such a manner that its radially outer edge has a radial distance (y) from the radially outer border (25) of the provided cooling channel (6), which distance is slightly greater than the width of the machining tools (28, 29, 30) used for producing the cooling channel (6),
= a groove-shaped undercut (20) which is open toward the piston crown (4) is implemented in the projection (17),
= the cooling channel (6) is implemented in the edge region of the piston crown (4), and
= pin bores (3, 3') are implemented and the outer contour of the piston (1) is finish-machined.

2. The method for producing a one-piece piston (1) for an internal combustion engine according to claim 1, **characterized in that** a forgeable heat-resistant steel is used as piston material.

3. The method for producing a one-piece piston (1) for an internal combustion engine according to claim 1, **characterized In that** a forgeable aluminum alloy is used as piston material.

4. The method for producing a one-piece piston (1) for an internal combustion engine according to claims 1 to 3, **characterized in that** the piston (1) is produced by turning.

5. The method for producing a one-piece piston (1) for an internal combustion engine according to any one of the preceding claims, **characterized in that** for reducing a gap (19') arising between the ring wall (7) and the radially outer edge of the projection (17), a ring element (44) is attached in the pin-boss-side region of the inner side (25) of the ring wall (7), wherein the pin-boss-side edge of said ring element extends into the cooling channel (6).

6. The method for producing a one-piece piston (1) for an internal combustion engine according to claim 5, **characterized in that** the cross-section of the ring element (44) has the shape of an inwardly-directed nose.

7. The method for producing a one-piece piston (1) for an internal combustion engine according to claim 5 or claim 6, **characterized in that** an elastically resilient metal is used as material for the ring element (44).

8. The method for producing a one-piece piston (1) for an internal combustion engine according to claim 5 or claim 6, **characterized In that** plastic is used as material for the ring element (44), and that the ring element (44) is adhesively bonded in the region of the face (18) to the inner side of the ring wall (7).

9. The method for producing a one-piece piston (1) for an internal combustion engine according to any one of the claims 5 to 8, **characterized in that** the ring element (44) has on its outer side a circumferential lug (46) which, for securing the ring element (44), is inserted into a correspondingly shaped circumferential groove (47) which is implemented in the region of the face (18) into the inner side (25) of the ring wall (7).

## Revendications

1. Procédé de fabrication d'un piston fait d'une seule pièce (1) pour un moteur à combustion interne,
- avec une tête de piston (4) ;
- avec deux portées d'axe de piston (9, 9') formées dans la tête de piston (4) et destinées chacune à recevoir un axe de piston (11, 11'), les portées d'axe de piston (9, 9') et les faces frontales (12) des axes de piston (11, 11') étant reculées en direction de l'axe longitudinal de piston (13) par rapport au bord radial extérieur de la tête de piston (4) ;
- avec deux éléments de jupe (14, 14') qui relient les axes de piston (11, 11'), qui sont reliés chacun à la tête de piston (4) par un raccord de jupe (10, 10'), les raccords de jupe (10, 10') présentant des ouvertures (16) formées entre les éléments de jupe (14, 14') et la tête de piston (4) ;
- avec un canal de refroidissement (6) de forme annulaire implanté dans la zone marginale de la tête de piston (4), dont la délimitation radialement extérieure est formée par une paroi annulaire (7) formée sur la tête de piston (4) et dont la délimitation radialement intérieure est formée partiellement par les portées d'axe de piston (9, 9') et partiellement par les raccords de jupe (10, 10') ; et
- avec une saillie (17) périphérique, prenant la forme d'une gouttière de graissage, formée partiellement sur les portées d'axe de piston (9, 9') et partiellement sur les raccords de jupe (10, 10'), grâce à laquelle le canal de refroidissement (6) est partiellement fermé du côté des axes de piston (11, 11') ;
**caractérisé en ce qu'**une ébauche de piston (22) est fabriquée par un procédé de forgeage ;
et **en ce que**, par un procédé d'usinage avec enlèvement de matière,
= sont réalisées l'ouverture (16) et, sur la face de la paroi annulaire (7) tournée vers les axes de piston (11, 11'), une fente (24) suffisamment large pour l'introduction des outils d'usinage, la saillie (17) étant formée de telle manière que son bord radialement extérieur se trouve par rapport à la délimitation radialement extérieure (25) du canal de refroidissement (6) prévu à une distance radiale (y) légèrement supérieure à la largeur des outils d'usinage (28, 29, 30) utilisés pour la fabrication du canal de refroidissement (6) ;
= une dépouille (20) en forme de rainure, ouverte en direction de la tête de piston (4), est réalisée dans la saillie (17) ;
= le canal de refroidissement (6) est implanté dans la zone marginale de la tête de piston (4) ; et
= les alésages des axes de piston (3, 3') sont réalisés et le contour extérieur du piston (1) est réalisé par un usinage de finition.

2. Procédé de fabrication d'un piston fait d'une seule pièce (1) pour un moteur à combustion interne selon la revendication 1, **caractérisé en ce que** l'on utilise comme matériau pour le piston un acier forgeable résistant à la chaleur.

3. Procédé de fabrication d'un piston fait d'une seule pièce (1) pour un moteur à combustion interne selon la revendication 1, **caractérisé en ce que** l'on utilise comme matériau pour le piston un alliage d'aluminium forgeable.

4. Procédé de fabrication d'un piston fait d'une seule pièce (1) pour un moteur à combustion interne selon l'une des revendications 1 à 3, **caractérisé en ce que** le piston (1) est fabriqué par tournage.

5. Procédé de fabrication d'un piston fait d'une seule pièce (1) pour un moteur à combustion interne selon l'une des revendications précédentes, **caractérisé en ce qu'**afin de réduire une fente (19') qui est formée entre la paroi annulaire (7) et le bord radialement extérieur de la saillie (17), on introduit dans la partie de la face intérieure (25) de la paroi annulaire (7) proche de l'axe de piston un élément annulaire (44) dont le bord situé du côté de l'axe du piston pénètre dans le canal de refroidissement (6).

6. Procédé de fabrication d'un piston fait d'une seule pièce (1) pour un moteur à combustion interne selon la revendication 5, **caractérisé en ce que** l'élément annulaire (44) présente en coupe transversale la forme d'un mentonnet tourné vers l'intérieur.

7. Procédé de fabrication d'un piston fait d'une seule pièce (1) pour un moteur à combustion interne selon l'une des revendications 5 ou 6, **caractérisé en ce que** l'on utilise comme matériau pour l'élément annulaire (44) un métal élastiquement déformable.

8. Procédé de fabrication d'un piston fait d'une seule pièce (1) pour un moteur à combustion interne selon l'une des revendications 5 ou 6, **caractérisé en ce que** l'on utilise comme matériau pour l'élément annulaire (44) une matière plastique et **en ce que** l'élément annulaire (44) est collé au niveau de la surface frontale (18) sur la face intérieure de la paroi annulaire (7).

9. Procédé de fabrication d'un piston fait d'une seule pièce (1) pour un moteur à combustion interne selon l'une des revendications 5 à 8, **caractérisé en ce que** l'élément annulaire (44) possède sur sa face extérieure une excroissance périphérique (46) qui est introduite dans une rainure périphérique (47) de forme correspondante, ménagée au niveau de la surface frontale (18) dans la face intérieure (25) de la paroi annulaire (7).
